(19) Europäisches Patentamt / European Patent Office / Office européen des brevets

(11) **EP 3 188 537 A1**

(12) **EUROPEAN PATENT APPLICATION**
published in accordance with Art. 153(4) EPC

(43) Date of publication:
**05.07.2017 Bulletin 2017/27**

(51) Int Cl.:
*H04W 28/06* (2009.01)     *H04B 7/04* (2017.01)
*H04J 1/00* (2006.01)     *H04J 11/00* (2006.01)
*H04J 99/00* (2009.01)     *H04W 72/04* (2009.01)

(21) Application number: **15835818.4**

(22) Date of filing: **20.08.2015**

(86) International application number:
**PCT/JP2015/073435**

(87) International publication number:
**WO 2016/031683 (03.03.2016 Gazette 2016/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **29.08.2014 JP 2014176203**

(71) Applicant: **NTT DOCOMO, INC.**
**Chiyoda-ku**
**Tokyo 100-6150 (JP)**

(72) Inventors:
• **KAKISHIMA, Yuichi**
 **Tokyo 100-6150 (JP)**
• **TAKEDA, Kazuki**
 **Tokyo 100-6150 (JP)**
• **NAGATA, Satoshi**
 **Tokyo 100-6150 (JP)**

(74) Representative: **Hoffmann Eitle**
**Patent- und Rechtsanwälte PartmbB**
**Arabellastraße 30**
**81925 München (DE)**

(54) **USER TERMINAL, WIRELESS BASE STATION, AND WIRELESS COMMUNICATION METHOD**

(57) To improve throughput and communication quality in radio communication by flexibly controlling UL transmission and DL transmission, a user terminal according to one aspect of the present invention is a user terminal that communicates with a radio base station using a downlink subframe for enabling a first downlink signal to be received, and an uplink subframe for enabling an uplink signal to be transmitted, and is characterized by having a transmission section that transmits an uplink signal using a predetermined radio access scheme in an uplink subframe, a reception section that receives a second downlink signal transmitted using the predetermined radio access scheme in an uplink subframe, and a control section that selects a transmission mode applied to the second downlink signal from a transmission mode applicable to the first downlink signal and a transmission mode applicable to the uplink signal to control reception processing.

FIG.4A

DL TM (e.g., 4-Tx TM9)

eNB

UE

DL SF

FIG.4B

UL TM (e.g., 2-Tx TM2)

eNB

UE

UL SF

FIG.4C

DL TM or UL TM

eNB

UE

DL-SCFDMA SF

**Description**

TECHNICAL FIELD

The present invention relates to a user terminal, radio base station, and radio communication method applicable to the next-generation communication system.

BACKGROUND ART

In UMTS (Universal Mobile Telecommunications System) networks, for the purpose of higher data rates, low delay and the like, Long Term Evolution (LTE) has been specified (Non-Patent Literature 1). In LTE, as multiple access schemes, a scheme based on OFDMA (Orthogonal Frequency Division Multiple Access) is used on downlink, and a scheme based on SC-FDMA (Single Carrier Frequency Division Multiple Access) is used on uplink. Further, for the purpose of wider bands and higher speed than LTE, a successor system (for example, sometimes called LTE Advanced or LTE Enhancement (hereinafter, referred to as "LTE-A")) to LTE has been studied and specified (Rel-10/11).

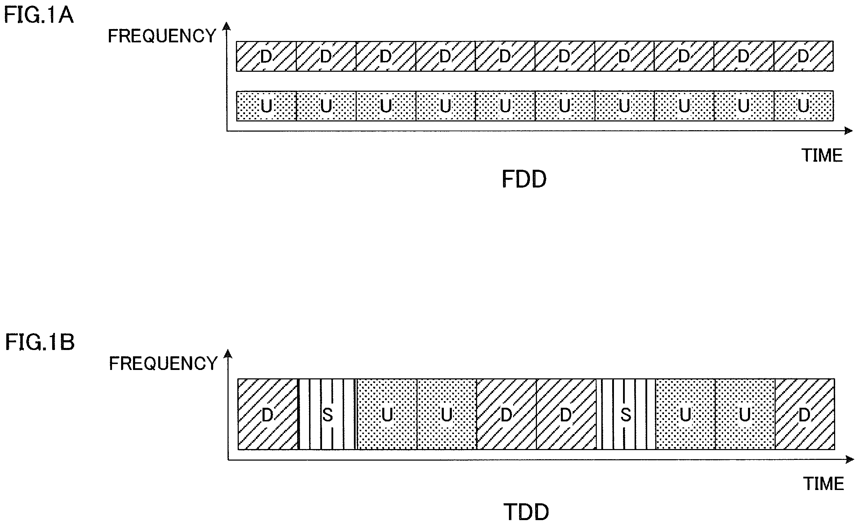

As a duplex-mode in radio communication of the LTE/LTE-A system, there are Frequency Division Duplex (FDD) for dividing frequencies into uplink (UL) and downlink (DL), and Time Division Duplex (TDD) for dividing time into uplink and downlink (see FIGs. 1A and 1B). In the case of TDD, the same frequency region is applied to communication of uplink and downlink, and a single transmission/reception point performs transmission/reception of signals by dividing time into uplink and downlink.

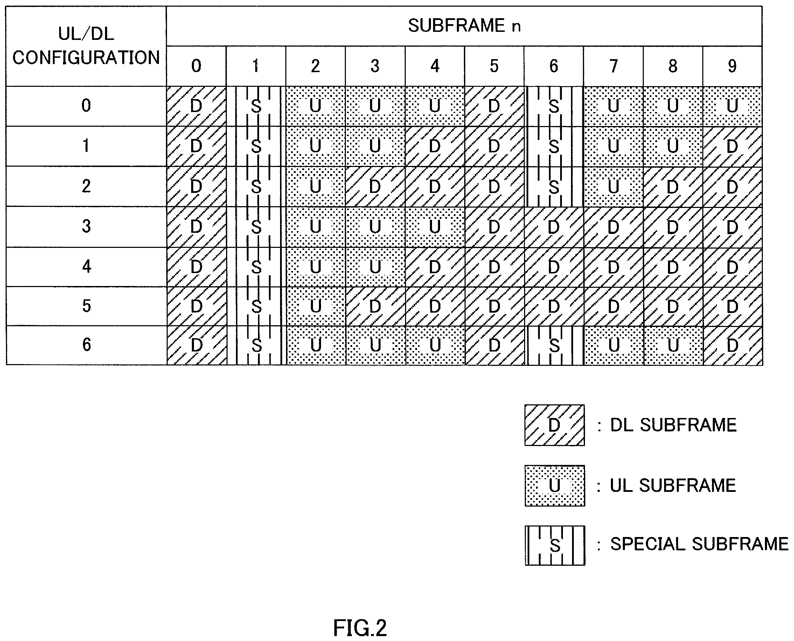

Further, in TDD of the LTE/LTE-A system, defined is a plurality of frame configurations (UL/DL configurations) with different ratios between uplink subframes (UL subframes) and downlink subframes (DL subframes) included in a radio frame. Specifically, as shown in FIG. 2, seven frame configurations of UL/DL configurations 0 to 6 are defined, subframes #0 and #5 are assigned to downlink, and subframe #2 is assigned to uplink.

Furthermore, a system band in the LTE-A system includes at least one component carrier (CC) with a system band of the LTE system as one unit. It is called carrier aggregation (CA) aggregating a plurality of component carriers (cells) to widen the band.

CITATION LIST

NON-PATENT LITERATURE

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2"

SUMMARY OF INVENTION

TECHNICAL PROBLEM

Generally, in a radio communication system, a traffic amount of DL and a traffic amount of UL are different from each other, and it is supposed that the DL traffic amount is larger than the UL traffic amount. Further, the ratio between the DL traffic amount and the UL traffic amount is not certain, and varies with time or with places.

However, in the existing LTE/LTE-A system, there are limitations in effective use (flexibility) of radio resources. For example, in FDD, it is not possible to use frequency resources for UL in DL communication. Also in TDD, it is not possible to dynamically use time resources for UL in DL communication.

Therefore, a method is desired which improves throughput and communication quality in radio communication by flexibly controlling UL transmission (UL communication) and DL transmission (DL communication) in consideration of the traffic amount and the like.

The present invention was made in view of such a respect, and it is an object of the invention to provide a user terminal, radio base station and radio communication method for enabling throughput and communication quality in radio communication to be improved by flexibly controlling UL transmission and DL transmission.

SOLUTION TO PROBLEM

A user terminal according to one aspect of the present invention is a user terminal that communicates with a radio base station using a downlink subframe for enabling a first downlink signal to be received, and an uplink subframe for enabling an uplink signal to be transmitted, and is characterized by having a transmission section that transmits an uplink signal using a predetermined radio access scheme in an uplink subframe, a reception section that receives a second downlink signal transmitted using the predetermined radio access scheme in an uplink subframe, and a control section that selects a transmission mode applied to the second downlink signal from a transmission mode applicable to the first downlink signal and a transmission mode applicable to the uplink signal to control reception processing.

Advantageous Effects of Invention

According to the present invention, it is possible to improve throughput and communication quality in radio communication by flexibly controlling UL transmission and DL transmission.

Brief Description of Drawings

FIG. 1 contains explanatory diagrams of duplex-modes in LTE/LTE-A;
FIG. 2 is a diagram illustrating UL/DL configurations used in a TDD cell of the existing system;
FIG. 3 contains diagrams showing one example of DL-SCFDMA transmission/reception;
FIG. 4 contains diagrams showing one example of transmission modes applied to downlink and uplink DL-SCFDMA subframes;
FIG. 5 is a diagram showing one example of radio resource allocation of DL-SCFDMA SF including DL SRS;
FIG. 6 is a diagram showing one example of radio resource allocation of DL-SCFDMA SF including Non-precoded DM-RS;
FIG. 7 is a diagram showing one example of the case of superimposing radio resource positions of UL DM-RS on radio resources of downlink signals assigned to one resource block in a normal cyclic prefix configuration;
FIG. 8 is a diagram showing one example where collision between signals occurs in DL-SCFDMA SF;
FIG. 9 is a diagram showing one example of a schematic configuration of a radio communication system according to one Embodiment of the present invention;
FIG. 10 is a diagram showing one example of an entire configuration of a radio base station according to one Embodiment of the invention;
FIG. 11 is a diagram showing one example of a function configuration of the radio base station according to one Embodiment of the invention;
FIG. 12 is a diagram showing one example of an entire configuration of a user terminal according to one Embodiment of the invention; and
FIG. 13 is a diagram showing one example of a function configuration of the user terminal according to one Embodiment of the invention.

DESCRIPTION OF EMBODIMENTS

As described above, in the existing LTE/LTE-A system, it is not possible use frequency resources for UL in DL communication in FDD, it is not possible to dynamically use time resources for UL in DL communication in TDD, and therefore, it is difficult to effectively exploit radio resources.

In order to solve such a problem, it is studied using time resources for UL of TDD as time resources for DL (eIMTA: enhanced Interference Mitigation and Traffic Adaptation) by changing UL/DL configurations of TDD for each cell in a semi-static manner. For example, a radio base station selects a UL/DL configuration (e.g., UL/DL configuration 4, 5 or the like in FIG. 2) with a high DL subframe ratio corresponding to a communication environment of the cell of the station, and is thereby capable of securing resources for DL communication. In addition, TDD with eIMTA applied thereto may be called dynamic TDD.

However, in the case of applying different UL/DL configurations between cells using TDD, interference control techniques are required, in order to suppress interference between UL and DL with a TDD cell adjacent in a geographic or frequency manner. Accordingly, other than eIMTA, desired is a method of flexibly controlling UL transmission and DL transmission to improve throughput of DL transmission.

The inventors of the present invention noted that communication (D2D discovery/communication) using a PUSCH (Physical Uplink Shared Channel) is supported between user terminals in D2D (Device to Device) communication. In other words, the user terminal supporting the D2D communication has a function capable of receiving a signal (SC-FDMA signal) transmitted in the same format (PUSCH format) as that of the PUSCH also in resources such as UL resources and guard period other than DL resources.

In the D2D communication studied in LTE Rel-12, a user terminal performs D2D discovery to discover communication-capable another user terminal. In the D2D discovery, a network allocates periodical uplink resources (PUSCH) to each user terminal as D2D discover resources in a semi-static manner. The user terminal assigns a discovery signal to D2D discovery resources to transmit. Further, the user terminal receives a discovery signal transmitted from another user terminal, and is thereby capable of discovering communication-capable another terminal. Thus, in the D2D communication, it is studied performing communication between user terminals using UL resources.

Further, the inventors of the present invention noted that predetermined UL resources are always not needed between a radio base station and a user terminal in the case of supporting application of carrier aggregation (CA) or dual connectivity (DC). For example, even when UL resources of a plurality of cells are concurrently allocated to a user terminal, it is possible to perform UL transmission in UL resources of one of the cells.

Therefore, the inventors of the present invention conceived that a user terminal performs DL communication in a UL sub frame by receiving a signal (e.g. PUSCH) transmitted in resources for UL from a radio base station. In other words, the radio base station assigns a signal with the same format (e.g. radio access scheme, signal format, etc.) as that of a UL signal of a user terminal to a UL subframe (including UL frequencies) of a TDD cell or FDD cell to transmit.

Herein, an UL signal (downlink signal transmitted using uplink resources) transmitted from a radio base station is also referred to as DL-SCFDMA (Downlink Single Carrier Frequency Division Multiple Access) or DL-SCFDMA signal. For example, in the case of transmitting DL-SCFDMA in the PUSCH format, the signal may be called DL PUSCH. In addition, for other UL signals, it is possible to define corresponding DL-SCFDMA signals. For example, a DL-SCFDMA signal corresponding to an SRS (Sounding Reference Signal) may be called DL SRS, a DL-SCFDMA signal corresponding to a DM-RS (Demodulation Reference Signal) may be called DL DM-RS, and a DL-SCFDMA signal corresponding to a PUCCH (Physical Uplink Control Channel) may be called DL PUCCH.

Further, a subframe in which a user terminal receives DL-SCFDMA is also referred to as a DL-SCFDMA subframe (DL-SCFDMA SF). The user terminal performs reception processing on a downlink signal assigned to the DL-SCFDMA subframe.

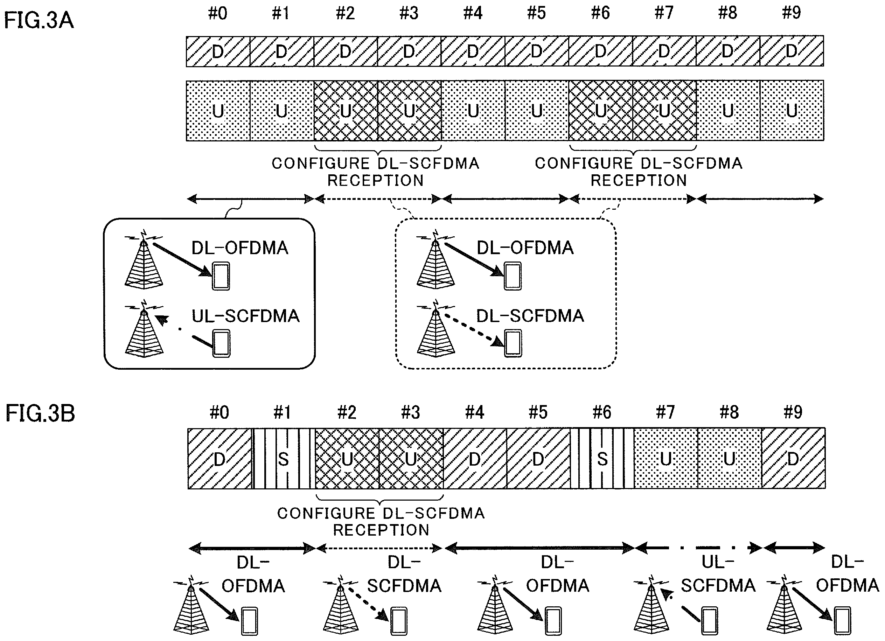

FIG. 3 shows one example in the case of performing DL communication using resources for UL. FIG. 3A shows the case of performing DL communication using a part of resources for UL (subframes #2, #3, #6, #7) of FDD. In other words, a radio base station transmits, to a user terminal, conventional DL signals (DL-OFDMA) in resources for DL, and DL signals (DL-SCFDMA) in a part of resources for UL (UL subframes). In addition, in the other resources for UL, as in the conventional manner, the user terminal transmits UL signals (UL-SCFDMA) using resources for UL.

FIG. 3B shows the case of performing DL communication using a part of resources for UL (herein, UL subframes #2, #3) of TDD. In other words, in a part of UL subframes of TDD, a radio base station transmits DL signals (DL-SCFDMA) to a user terminal using resources for UL. In addition, in the other subframes (herein, UL subframes #7, #8), as in the existing LTE/LTE-A system, the user terminal transmits UL signals (UL-SCFDMA) using resources for UL. In addition, FIG. 3B shows TDD UL/DL configuration 1, but this Embodiment is not limited thereto.

In the example of FIG. 3, the case is shown where DL communication is performed using UL subframes, and by performing UL-SCFDMA communication also in the other resources, for example, such as a special subframe and guard period, it is possible to perform flexible resource allocation.

Further, a user terminal is capable of being configured to beforehand notify a network that the terminal has a capability (also referred to as SC-FDMA reception capability, DL-SCFDMA capability or the like) of receiving DL-SCFDMA. By this means, the radio base station is capable of transmitting DL-SCFDMA selectively to a predetermined user terminal.

The SC-FDMA reception capability may be defined as a capability of a user terminal. In this case, upon receiving notification indicative of having the SC-FDMA reception capability from a user terminal, the radio base station is capable of regarding the user terminal as being capable of performing DL-SCFDMA reception in an arbitrary frequency band.

On the other hand, the SC-FDMA reception capability may be defined as a capability of a user terminal in a particular frequency band (or serving cell). In this case, the user terminal notifies a radio base station whether or not the terminal has the SC-FDMA reception capability in each frequency band (or serving cell) in which the terminal is capable of communicating. The radio base station is capable of configuring so that the user terminal performs DL-SCFDMA reception (reception of SC-FDMA) in the frequency band (or serving cell) in which the user terminal has the SC-FDMA reception capability.

Further, the radio base station configures SC-FDMA reception in UL resources for the user terminal. For example, using higher layer signaling (RRC signaling, broadcast signal, etc.), the radio base station notifies the user terminal of information on configuring (enable/disable) DL/SCFDMA reception, while notifying of information (e.g., information on transmission timing of DL-SCFDMA, DCI format used in scheduling and the like) required for DL-SCFDMA reception. Furthermore, the radio base station may dynamically transmit information on a DL-SCFDMA reception instruction, or may notify in combination of higher layer signaling and dynamic signaling.

The user terminal checks whether or not the DL-SCFDMA reception instruction (e.g., DL-SCFDMA grant) is received from the radio base station, and controls operation corresponding to the presence or absence of the grant. For example, the user terminal receiving the DL-SCFDMA grant may grasp that DL-SCFDMA SF is assigned after a lapse of predetermined time since the reception. Further, after performing reception processing (e.g., demapping, demodulation, decoding, etc.) on DL-SCFDMA received from the radio base station in UL resources (UL frequency in FDD, UL subframe in TDD), the user terminal is capable of delivering from the physical layer to the higher layer as a downlink signal (e.g., data, control information, etc.).

In addition, the DL-SCFDMA grant may be the grant (e.g., DL grant, UL grant) used in the conventional LTE system, may be a grant obtained by extending such a grant, or may be a grant with a different configuration from that of the conventional grant.

Described below are advantageous effects exerted by that the radio base station transmits DL signals (DL-SCFDMA) to the user terminal using UL resources.

First, it is possible to flexibly exploit UL resources in DL communication corresponding to traffic amounts of UL and DL. Further, also in the case of applying TDD, without changing the UL/DL configuration, it is possible to flexibly exploit radio resources.

Further, it is possible to dynamically use UL resources in DL communication on a basis of 1 ms corresponding to a transmission time interval (e.g. subframe). Furthermore, by combining with CA/DC to apply, it is possible to use UL resources in FDD and TDD flexibly and dynamically for DL communication.

Still furthermore, it is possible to regard the radio base station that performs DL-SCFDMA transmission as being equal to a user terminal that performs UL transmission of the PUSCH using UL resources, and a user terminal that performs D2D communication in a cell adjacent in a physical or frequency manner. Herein, for the reference signal (UL DM-RS (Demodulation Reference Signal)) used in decoding of the PUSCH, it is possible to randomize (whiten) interference by making reference signal sequences or scramble codes different between cells adjacent in a physical or frequency manner. Accordingly, by using the PUSCH (DL PUSCH) in DL communication using UL resources, even when a collision occurs with the PUSCH transmitted from a user terminal of a peripheral cell in a physical or frequency manner, since the effect of interference randomizing (whitening) is obtained, it is possible to suppress deterioration caused by interference.

As described above, by introduction of DL-SCFDMA, it is possible to actualize flexible resource allocation and traffic adaptation. However, it has previously not been conceived that a user terminal receives DL-SCFDMA transmitted from a radio base station in a UL subframe. Therefore, with respect to transmission/reception of DL-SCFDMA, it is considered that it is not effective applying the conventional LTE/LTE-A system configuration without modification. Particularly, any proposals have not been made on a MIMO (Multi Input Multi Output) transmission mode, signal configuration for channel state estimation and the like in DL-SCFDMA SF.

Therefore, the inventors of the present invention conceived properly specifying MIMO transmission, CSI (Channel State Information) feedback, method of scheduling subframes and the like in DL-SCFDMA in a radio communication system using DL-SCFDMA. According to one aspect of the invention, by exploiting resources specified for UL in LTE/LTE-A for DL communication, it is possible to actualize proper MIMO and achieve efficient CSI feedback in the DL communication. As a result, it is possible to actualize flexible resource allocation and traffic adaptation, and achieve high throughput characteristics.

Embodiments of the present invention will be described below in detail. Using a cell to apply DL-SCFDMA transmission/reception, and a cell not to apply, it is possible to apply carrier aggregation (CA) or dual connectivity (DC). For example, it is possible to apply CA by regarding a cell that does not perform DL-SCFDMA transmission/reception as a primary cell (PCell), and a cell that performs DL-SCFDMA transmission/reception as a secondary cell. Further, in each Embodiment, CA or DC may be applied by using a plurality of cells capable of applying DL-SCFDMA transmission/reception.

CA refers to integrating a plurality of component carriers (also referred to as CC, carrier, cell or the like) to broaden the band. For example, each CC has a bandwidth with a maximum of 20 MHz, and in the case of integrating a maximum of five cells, a wide band with a maximum of 100 MHz is achieved. In the case of applying CA, a scheduler of a single radio base station controls scheduling of a plurality of CCs. From the foregoing, CA may be called intra-base station CA (intra-eNB CA).

Dual connectivity (DC) is the same as CA in the respect of integrating a plurality of CCs to broaden the band. In the case of applying DC, a plurality of schedulers is provided independently, and each of the plurality of schedulers controls scheduling of one or more cells (CCs) under control thereof. From the foregoing, DC may be called inter-base station CA (inter-eNB CA). In addition, in DC, carrier aggregation (intra-eNB CA) may be applied for each scheduler (i.e. radio base station) provided independently.

Further, in each Embodiment, it is assumed that a user terminal is capable of performing D2D communication, but the invention is not limited thereto. For example, each Embodiment is applicable to a user terminal capable of performing DL-SCFDMA reception.

(Embodiment 1: Transmission mode)

Embodiment 1 describes a MIMO transmission mode (TM) to apply to a DL-SCFDMA subframe.

In the conventional system, a downlink TM is used in DL subframes, and an uplink TM is used in UL subframes. The downlink TM is a TM used in transmission of DL data signals such as the PDSCH (Physical Downlink Shared Channel). The uplink TM is a TM used in transmission of UL data signals such as the PUSCH.

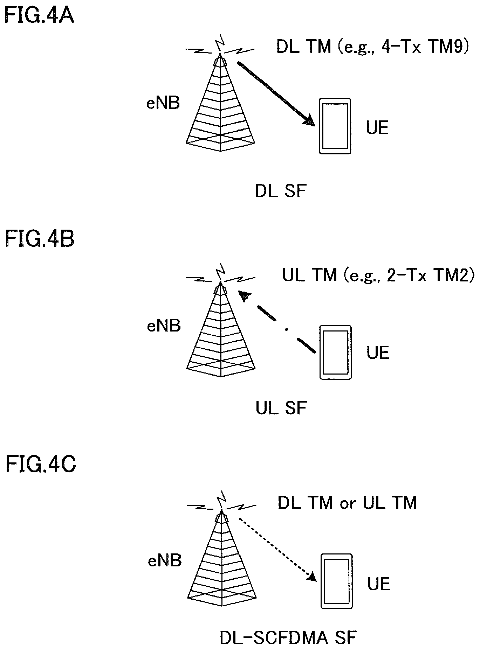

FIG. 4 contains diagrams showing one example of transmission modes applied to downlink and uplink DL-SCFDMA subframes. FIG. 4A shows an example of performing DL transmission with 4 antenna ports, for example, using TM 9 as the downlink TM in DL subframes. Further, FIG. 4B shows an example of performing UL transmission with 2 antenna ports, for example, using TM 2 as the uplink TM in UL subframes.

On the other hand, in the conventional system, since the TM in DL-SCFDMA subframes is not conceived, it is not possible to use a suitable TM. Therefore, in Embodiment 1 in the present invention, as shown in FIG. 4C, a radio base station selects a TM to apply to each DL-SCFDMA SF from downlink TM and uplink TM. Selection of TM to apply to DL-SCFDMA SF may be performed dynamically or semi-statically.

In the case of applying the downlink TM to DL-SCFDMA, the radio base station needs to be able to perform SC-FDMA transmission using the downlink TM, and the user terminal needs to be able to perform SC-FDMA reception using the downlink TM. In addition, according to the downlink TM (e.g., TM 1 to 10), there is a difference in transmission signal processing such as SFBC (Space Frequency Block Coding), FSTD (Frequency Switched Transmit Diversity), CDD (Cyclic Delay Diversity) and CL (Closed-Loop)-precoding to actualize.

In order to actualize DL-SCFDMA using the downlink TM, with respect to SFBC, FSTD, CDD, and CL-precoding, signal processing of conventional (e.g., LTE Rel-11) DL may be adopted. By this means, it is possible to simplify transmission signal processing in the radio base station and reception signal processing in the user terminal. Further, it is possible to select a TM in accordance with the numbers of antenna ports of the radio base station and user terminal. Further, with respect to CL-precoding, PMI (Precoding Matrix Indicator) feedback using the conventional DL codebook may be performed. In other words, with reference to the DL codebook, by determining precoding weights used in DL-SCFDMA (e.g., DL PUSCH), more efficient CSI feedback may be achieved.

In the case of applying the uplink TM to DL-SCFDMA, the radio base station needs to be able to perform SC-FDMA transmission using the uplink TM, and the user terminal is capable of performing SC-FDMA reception using the uplink TM (because, the terminal is already capable of performing in D2D). Accordingly, by applying the uplink TM, it is possible to reduce the implement cost of the user terminal. In addition, when the number of antenna ports of the radio base station is higher than the number of antenna ports of the user terminal, antenna virtualization may be applied.

Herein, antenna virtualization is a method of transmitting signals using physical antennas to be equal to transmission signals in the case of using virtual antennas lower in number than the physical antennas. For example, in the case of using four physical antennas (#0 to #3) in virtual antennas with two ports (#0, #1), the virtual antenna port #0 is divided into physical antennas #0 and #1 to assign, and the virtual antenna port #1 is divided into physical antennas #2 and #3 to assign.

The TM of DL-SCFDMA SF may be implicitly linked to the TM of uplink and downlink in other subframes. For example, the user terminal may select the TM to apply to DL-SCFDMA based on the DL (UL) TM used in DL (UL) subframes in the same radio frame. In this case, it is possible to simplify control, and it is possible to reduce CSI feedback information. The user terminal may be beforehand notified or set of/for information on the TM associated with the TM of DL-SCFDMA, by higher layer signaling (e.g. RRC signaling), MAC control element (MAC CE), physical layer control signal (e.g. DCI (Downlink Control Information)) and the like. For example, as the information, a subframe index may be used. The user terminal is capable of using the same TM as that used in the notified/configured subframe index in DL-SCFDMA.

Further, the TM of DL-SCFDMA SF may be designated explicitly. For example, the TM used in each DL-SCFDMA SF may be notified by higher layer signaling (e.g. RRC signaling), MAC control element (MAC CE), physical layer control signal and the like. In this case, it is possible to ensure versatility in NW operation. For example, the information used in explicit designation may be information on the TM to use (use uplink TM or downlink TM), or may include an index of the TM.

Since the number of DL-SCFDMA SFs for a predetermined period is limited, there is the case where it is difficult to ensure sufficient CSI feedback. In terms of this respect, the TM of DL-SCFDMA SF may be limited to TMs (e.g. Single Tx, Tx diversity, Reciprocity based precoding) where closed-loop type control is not performed. By this means, it is possible to achieve resistance to shift trackability of the user terminal and simplification of the entire system configuration.

Further, in the case of performing TM switching of DL-SCFDMA SF (e.g. switching by RRC signaling), time (ambiguity interval) occurs where the radio base station does not grasp completion of TM switching in the user terminal. In terms of this respect, it is preferable to apply a fallback mode to TM switching of DL-SCFDMA SF.

For example, by using a DCI format common to the TM in DL-SCFDMA SF in the ambiguity interval, used is the TM of SISO (Single Input Single Output)/SIMO (Single Input Multi Output) transmission or transmission diversity. Specifically, in the case of using the uplink TM as the TM of DL-SCFDMA SF, the DCI format common to the uplink TM is included in the DL-SCFDMA grant. Further, in the case of using the downlink TM as the TM of DL-SCFDMA SF, the DCI format common to the downlink TM is included in the DL-SCFDMA grant.

For example, in the case of scheduling DL-SCFDMA with the DL grant, it is possible to fall back to DCI format 1 A. Further, in the case of scheduling DL-SCFDMA with the uplink grant, it is possible to fall back to DCI format 0. By this means, even at the ambiguity interval of switching of TM, it is possible to acquire at least information required for transmission with a single antenna or transmission diversity, and it is thereby possible to ensure transmission of DL-SCFDMA.

(Embodiment 2: CSI measurement/feedback)

Embodiment 2 describes CSI measurement and CSI feedback applied to a DL-SCFDMA subframe (DL-SCFDMA SF). This Embodiment describes two cases of not performing CSI measurement and of performing CSI measurement in DL-SCFDMA SF.

In the case of not performing CSI measurement in DL-SCFDMA SF, a part or the whole of CSI (e.g. RI (Rank Indicator), PMI and CQI (Channel Quality Indicator)) of DL SF may be reused as the CSI of DL-SCFDMA. In other words, such a configuration may be made that a part or the whole of information on the CSI about DL-SCFDMA is not transmitted as feedback. In this case, the need is eliminated for CSI measurement in DL-SCFDMA SF, and it is possible to efficiently use radio resources. Further, it is possible to reduce the number of CSI feedback bits. In addition, also in the case of performing CSI measurement in DL-SCFDMA SF, a part or the whole of CSI of DL SF may be reused as the CSI of DL-SCFDMA.

On the other hand, in the case of performing CSI measurement in DL-SCFDMA SF, it is possible to use the CSI specific to DL-SCFDMA SF (D2D SF). In this case, it is possible to properly consider a possible difference occurring between the CSI of DL SF and the CSI of DL-SCFDMA SF. Specifically, it is possible to consider a characteristic difference in principles (e.g. SC-FDMA is lower in CQI than OFDMA) between OFDMA of DL SF and SC-FDMA of DL-SCFDMA SF. Further, it is possible to consider a difference in transmission power between DL SF and DL-SCFDMA SF (e.g. to reduce interference, DL-SCFDMA is transmitted with lower power than that of DL SF.) Furthermore, it is possible to consider that the CSI may vary in DL-SCFDMA SF corresponding to whether an adjacent cell is UL SF or DL-SCFDMA SF.

In the case of using the CSI specific to DL-SCFDMA SF, it has not been studied in the conventional system what signal is used for CSI measurement. Therefore, the inventors of the present invention studied configurations of a channel measurement signal (signal used in CSI measurement) for DL-SCFDMA, and found out Embodiment 2 of the invention.

As a signal (e.g. reference signal for CSI measurement) used in CSI measurement of DL-SCFDMA SF, it is possible to use an SRS (DL SRS) for DL-SCFDMA corresponding to a UL SRS, a signal without applying precoding, and a CSI-RS (Channel State Information Reference Signal) applied to the DL subframe. Particularly, as the channel measurement signal of DL-SCFDMA SF, it is preferable to use signals of different signal configurations (e.g. different radio resource allocation, different format or the like) from those of the channel measurement signal of DL SF and channel measurement signal of UL SF. The configuration of each signal will specifically be described below.

(Case of using SRS for CSI measurement of DL-SCFDMA SF)

In order to support all user terminals inside the cell, as a result of that a plurality of user terminals uses respective different bands, the UL SRS is transmitted in the entire band. On the other hand, as distinct from the UL SRS, since the DL SRS does not need user multiplexing, the insertion density may be made lower than that of the UL SRS. For example, by reducing the insertion density to the same degree as that of the DL CSI-RS, it is possible to efficiently use radio resources.

Therefore, it is possible to make a configuration that the DL SRS is multiplexed into only a part of a last symbol of DL-SCFDMA SF. For example, by applying existing or extended frequency hopping, Comb (pattern of transmission frequencies), frequency domain puncture and the like, a part of radio resources of a symbol is used, and it is thereby possible to reduce overhead. Further, in an RE (Resource Element) without the DL SRS being multiplexed in the last symbol, another physical channel such as DL PUSCH or another signal may be multiplexed.

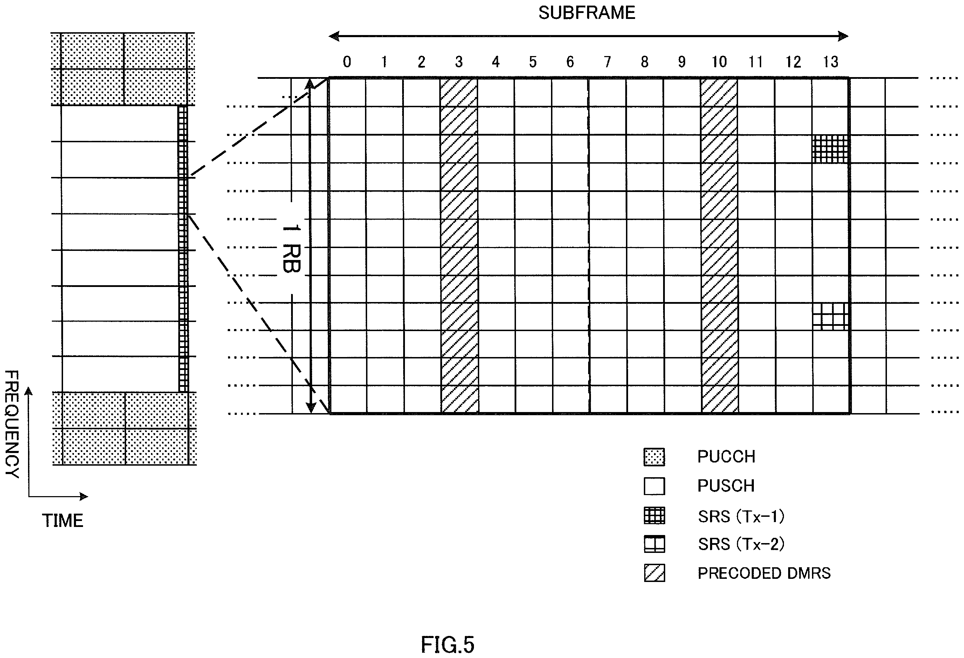

FIG. 5 is a diagram showing one example of radio resource allocation of DL-SCFDMA SFs including the DL SRS. For example, to DL-SCFDMA SFs are allocated the PUCCH (DL PUCCH) used in assignment of a control signal, the PUSCH (DL PUSCH) used in assignment of a data signal, and the DM-RS (Precoded DM-RS) used in demodulation of a data signal with precoding applied thereto.

In FIG. 5, the SRS (DL SRS) used in measurement of a channel state is allocated to symbol #13 that is the last symbol. Specifically, the SRS (SRS (Tx-1), SRS (Tx-2)) corresponding to each antenna is allocated to a respective different radio resource. Further, in symbol #13 that is the last symbol, the PUSCH is allocated to radio resources to which the SRS is not assigned.

In addition, among DL-SCFDMA SFs, there may be subframes in which the DL SRS is not transmitted. In this case, a DL-SCFDMA SF to transmit the DL SRS may be configured, or the presence or absence of the DL SRS in a predetermined DL-SCFDMA SF may dynamically be notified. In the subframe set for the DL SRS, it is possible to set the DL PUSCH for a shortened format (shortened PUSCH) to use resources except the last symbol, and in the other subframes, it is possible to set a normal format (normal PUSCH) for enabling resources of the last symbol to be used.

In consideration of interference and the like, although it is necessary to transmit the UL SRS in a narrow band using limited transmission power, the DL SRS is transmitted from a radio base station, and is thereby capable of being transmitted in a wide band. Accordingly, the DL SRS may be configured to be transmitted in a system bandwidth. In this case, it is possible to actualize CSI estimation of a wide band.

In addition, information (e.g. transmission period, transmission timing offset (start subframe number), transmission bandwidth, and frequency position (e.g. start subcarrier number) of the DL SRS) on the configuration of the DL SRS may be transmitted by higher layer signaling (e.g. RRC signaling), MAC control element (MAC CE), physical layer control signal and the like to be configured.

Further, transmission timing of the DL SRS may be notified on a basis of a radio frame. For example, in the case of using TDD as a duplex-mode, a bit map may be notified which indicates whether or not to transmit the DL SRS in each UL SF included in UL/DL config. As one example, since 6 UL SFs exist inside a radio frame in UL/DL config. 0, it is possible to notify of transmission timing of the DL SRS with a bit map of 6 bits. For example, in the case of setting "0" for the absence of the DL SR, and setting "1" for the presence of the DL SRS, a bit map of "011011" represents a configuration that the DL SRS is transmitted in subframes #3, #4, #8 and #9. Further, transmission timing of the DL SRS may be notified in combination of the transmission period and the bit map on a basis of a radio frame.

(Case of using a signal without precoding being applied in CSI measurement of DL-SCFDMA SF)

In the existing DM-RS (Precoded DM-RS), the same precoding as that of the data signal (PUSCH, PDSCH) is applied. However, in the Precoded DM-RS, it is not possible to estimate a Non-precoded channel. Therefore, in this Embodiment, in DL-SCFDMA SF, a signal without precoding being applied is included so as to actualize both of DL PUSCH demodulation and CSI measurement of DL-SCFDMA SF.

In addition, for example, the signal without precoding being applied may be called Non-precoded DM-RS, Non-precoded CSI-RS and the like. Further, the signal without precoding being applied may be a signal of the same or similar signal configuration (radio resource allocation, format and the like) as/to that of the reference signal (e.g. CRS (Cell-specific Reference Signal)) of the existing system, or may include a new reference signal (including modifications of the existing reference signal).

Described is demodulation of a transmission signal in the case where precoding is applied to a signal used in CSI measurement (e.g. the case where UL TM 2 is applied). Herein, it is assumed that the DL PUSCH and a signal used in CSI measurement are multiplied by the same precoding. The signal used in CSI measurement is a signal (e.g. Precoded DM-RS) with precoding applied thereto.

[Mathematics 1]

A received signal y on the reception side (e.g. user terminal) is represented by the following equation 1.

$$(\text{Equation } 1)$$

$$\mathbf{y} = \mathbf{HWx} + \mathbf{n}$$

Herein, **y** represents a received signal, **H** represents a propagation channel (channel matrix), **W** represents a precoder (precoding weight), **x** represents a transmission signal, and n represents noise (receiver noise).

[Mathematics 2]

The reception side is capable of estimating a precoded channel (=**HW**) based on the Precoded DM-RS. Then, the reception side multiplies the received signal **y** by the inverse matrix of an estimation result of the precoded channel, and is thereby capable of demodulating the transmission signal. The demodulated transmission signal $\hat{\mathbf{x}}$ is represented by the following equation 2.

(Equation 2)

$$\hat{\mathbf{x}} = \left(\mathbf{HW}\right)^{-1}\mathbf{y}$$
$$= \left(\mathbf{HW}\right)^{-1}\mathbf{HWx} + \left(\mathbf{HW}\right)^{-1}\mathbf{n}$$
$$= \mathbf{x} + \mathbf{n}'$$

Described next is demodulation of a transmission signal in the case where precoding is not applied to a signal used in CSI measurement (e.g. the case where DL TM 4 is applied). Herein, it is assumed that the DL PUSCH is multiplied by a precoder, and that a signal used in CSI measurement is not multiplied by the precoder. In other words, the signal used in CSI measurement is a signal (e.g. Non-precoded DM-RS) without precoding being applied.

[Mathematics 3]

The received signal y on the reception side is represented by the above-mentioned equation 1. Based on the signal to which precoding is not applied, the reception side is capable of estimating the Non-precoded channel (=$\mathbf{H}$) of a channel state where precoding is not applied.

On the other hand, the radio base station notifies the user terminal of information on the precoder applied to the DL PUSCH. As the information, for example, it is possible to include a TPMI (Transmitted Precoding Matrix Indicator). The TPMI is information indicative of the PMI applied to the DL PUSCH, and for example, may be a TPMI notified in the DL grant (DCI format 2).

[Mathematics 4]

The reception side is capable of demodulating a transmission signal, based on the received signal $\mathbf{y}$, and precoder $\mathbf{W}'$ (=$\mathbf{W}$) indicated by the estimation channel matrix $\mathbf{H}$ and TPMI. The demodulated transmission signal $\hat{\mathbf{x}}$ is represented by the following equation 3.

(Equation 3)

$$\hat{\mathbf{x}} = \left(\mathbf{HW}'\right)^{-1}\mathbf{y}$$
$$= \left(\mathbf{HW}'\right)^{-1}\mathbf{HWx} + \left(\mathbf{HW}'\right)^{-1}\mathbf{n}$$
$$= \mathbf{x} + \mathbf{n}''$$

In addition, the Non-precoded DM-RS may be a configuration to apply to a part of DL-SCFDMA SFs. For example, in DL-SCFDMA, the Non-precoded DM-RS may be configured to transmit on a TTI (subframe)-by-TTI basis, or may be configured to transmit on an RB (resource block-by-RB basis.

For example, it may be configured that the Non-precoded DM-RS is transmitted in DL-SCFDMA where CSI measurement is performed, and that the existing DM-RS (precoded DM-RS) is transmitted in DL-SCFDMA SF where CSI measurement is not performed. In this case, it is possible to actualize CSI measurement, while achieving high transmission characteristics.

Further, in a predetermined DL-SCFDMA subframe, the Non-precoded DM-RS and precoded DM-RS may coexist to be allocated. For example, in a predetermined DL-SCFDMA subframe, the Non-precoded DM-RS may be multiplexed at certain subcarrier intervals. By this means, even in a single subframe, it is made possible to perform CSI measurement and data demodulation with high accuracy using the precoded DM-RS.

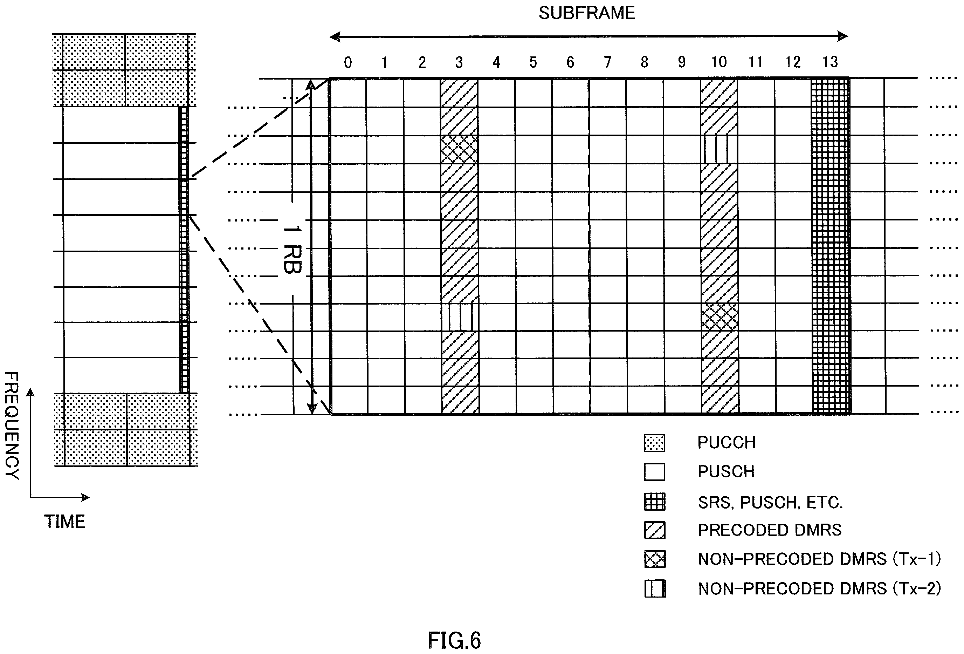

FIG. 6 is a diagram showing one example of radio resource allocation of DL-SCFDMA SFs including the Non-precoded DM-RS. In FIG. 6, a part of Precoded DM-RSs in FIG. 5 is replaced with the DM-RS (Non-precoded DM-RS) used in measurement of a channel state. Specifically, in symbols #3 and #10, the Non-precoded DM-RS (Non-precoded DM-RS (Tx-1), Non-precoded DM-RS (Tx-2)) corresponding to each antenna is allocated to a respective different radio resource. Further, inter-slot hopping (frequency hopping) is applied among a plurality of Non-precoded DM-RSs.

It may be configured that the DL SRS is not assigned to the SF including the Non-precoded DM-RS as shown in FIG. 6. For example, in #13 that is the last symbol in FIG. 6, the DL SRS may be allocated, or other signals such as the DL PUSCH may be allocated. In this case, by reducing resource allocation of (or not allocating) the DL SRS, and instead thereof, multiplexing other physical channels such as the DL PUSCH and other signals, it is possible to reduce overhead of the SRS, and achieve improvements in throughput and high efficiency of radio resources.

Further, information (e.g. transmission period, transmission bandwidth, frequency position (e.g. start subcarrier number)) on the configuration of the Non-precoded DM-RS may be notified by higher layer signaling (e.g. RRC signaling), MAC control element (MAC CE), physical layer control signal and the like to be configured.

(Case of using CSI-RS in CSI measurement of DL-SCFDMA SF)

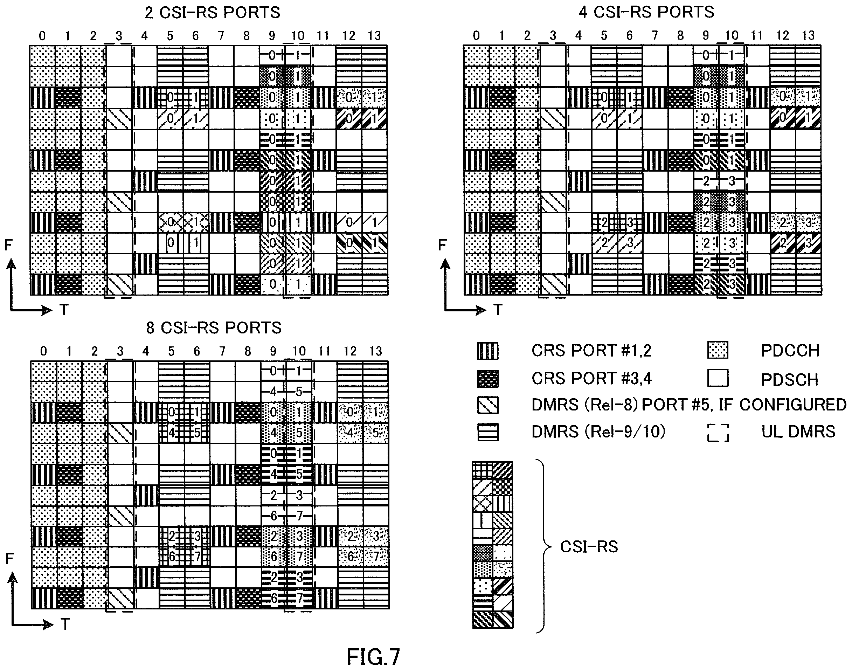

It may be configured that the radio base station multiplexes the CSI-RS specified in downlink into the DL-SCFDMA SF, and that the user terminal performs CSI measurement using the CSI-RS. However, an RE used in the existing downlink CSI-RS sometimes overlaps a part of radio resources used in the UL DM-RS. FIG. 7 is a diagram showing one example of the case of superimposing radio resource positions of the UL DM-RS on radio resources of downlink signals assigned to one resource block in a normal cyclic prefix configuration. FIG. 7 illustrates configurations respectively including CSI-RSs of 2 antenna ports, 4 antenna ports and 8 antenna ports. The UL DM-RS is allocated to symbols #3 and #10, and therefore, overlaps the CSI-RS.

In this Embodiment, with respect to the CSI-RS configuration (CSI-RS config) where overlapping of CSI-RS and UL DM-RS may occur, for example, by one of the following methods, or in combination thereof, the overlapping is avoided: (1) limitations are imposed so as to use only the CSI-RS Config. where the CSI-RS and DM-RS do not overlap; (2) shift the multiplexing position of the CSI-RS (for example, shift the multiplexing position of the CSI-RS overlapping to a prior symbol by one symbol); and (3) shift the multiplexing position of the DM-RS (for example, shift the multiplexing position of the DM-RS in the latter slot of the subframe to a subsequent symbol by one symbol).

In addition, information (e.g. information on available CSI-RS Config, resource position and shift amount of the CSI-RS to shift, resource position and shift amount of the DM-RS, and the like) may be configured by higher layer signaling (e.g. RRC signaling), MAC control element (MAC CE), physical layer control signal and the like. Further, the CSI-RS used in CSI measurement of DL-SCFDMA SF may be called CSI-RS for DL-SCFDMA.

As described above, Embodiment 2 shows the case of performing CSI measurement using a predetermined signal in DL-SCFDMA SF, but the method of CSI measurement is not limited thereto. For example, CSI measurement of DL-SCFDMA SF may be derived from a result of CSI measurement in an uplink channel by applying reciprocity of the channel. For example, it is possible to regard an uplink channel estimated in a special subframe (Special SF) or UL SF as being the same channel state as that of the channel of DL-SCFDMA SF. In the case where a difference between transmission power of DL-SCFDMA and transmission power of the UL signal is a predetermined value (e.g. 0) or less, a CSI measurement result of DL-SCFDMA may be a CSI measurement result of the uplink channel.

In addition, feedback information of CSI measurement of DL-SCFDMA SF may include one of RI, PMI and CQI. Herein, as the PMI, a PMI (UL codebook based PMI) based on the codebook for uplink may be used, or a PMI (DL codebook based PMI) based on the codebook for downlink may be used. In addition, since DL-SCFDMA is downlink transmission, it is preferable to use the codebook for downlink. For example, even when the uplink TM is applied, by applying the downlink PMI, it is possible to transmit the CSI consistent with the DL subframe as feedback.

Herein, pieces of CSI information of the DL SF and DL-SCFDMA may be transmitted separately as feedback. For example, an independent CSI process may be configured in the DL SF and the DL-SCFDMA, or a plurality of (e.g. two types) of different CSI may be reported using the concept of a subframe set used in eICIC (enhanced Inter-Cell Interference Coordination) or eIMTA. For example, different pieces of CSI may be reported respectively in a fixed subframe sect common in a plurality of UL/DL configurations, and in a flexible subframe set different in a plurality of UL/DL configurations. Further, codes to discriminate between information on the DL SF and information on the DL-SCFDMA may be multiplexed into the CSI.

Further, the CSI shared between the DL-SCFMDA SF and the DL SF may be transmitted as feedback. In this case, a Reference resource used in CSI feedback may be one of the DL SF and the DL-SCFDMA SF. In addition, the radio base station may notify the user terminal of information indicative of the Reference resource. For example, the information may include a subframe index, subframe type (kind (DL SF, UL SF, DL-SCFDMA SF, etc.) of SF used in CSI measurement), position of a radio resource used in CSI measurement, and the like.

(Embodiment 3: Scheduling of DL-SCFDMA SF)

Embodiment 3 describes scheduling of DL-SCFDMA SF.

(Collision of DL-SCFDMA SF and UL SRS)

The case will be described first where scheduling of DL-SCFDMA SF overlaps a cell-specific UL SRS transmission subframe. In this case, one of user terminals inside the cell is instructed to transmit the SRS in a predetermined UL subframe, and the radio base station transmits DL-SCFDMA to a predetermined user terminal.

When the user terminal receiving DL-SCFDMA is not instructed to transmit the UL SRS (i.e. another user terminal transmits the UL SRS), the user terminal reserves a last symbol of DL-SCFDMA SF for the UL SRS (i.e. does not transmit a signal in the last symbol). For example, the shortened format is applied to DL-SCFDMA SF.

On the other hand, when the user terminal receiving DL-SCFDMA is instructed to transmit the UL SRS (there is UL SRS transmission of the user terminal), for example, by one of the following methods, the user terminal performs both or one of reception of DL-SCFDMA and transmission of UL SRS: (1) the terminal receives the DL-SCFDMA SF in a part of symbols (e.g. former symbol), and transmits the UL SRS in another symbol (e.g. latter symbol); (2) the terminal ignores the DL-SCFDMA grant (transmits the UL SRS); and (3) the terminal receives DL-SCFDMA (does not transmit the UL SRS).

Herein, in the method of above-mentioned (1), by providing switching of DL/UL with a guard period, it is possible to compensate for a TA (Timing Advance) interval. For example, the same guard period as in the special subframe configuration of TDD may be set. By providing the same guard period as in the existing special subframe configuration, it is possible to set a length of a proper guard period, while suppressing signaling.

In addition, when scheduling of DL-SCFDMA SF does not overlap the cell-specific UL SRS transmission subframe, it is possible to ensure the transmission quality by applying a last symbol of DL-SCFDMA SF to data transmission (DL-SCFDMA transmission).

(Case where DL-SCFDMA SF and UL SF are continued)

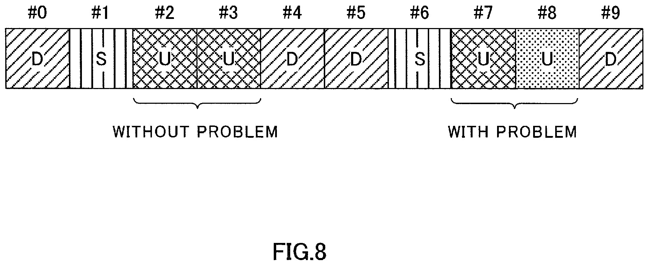

When DL-SCFDMA SF and UL SF are continued subframes, in the conventional LTE/LTE-A system, a user terminal is not able to secure a guard period to switch from DL to UL. FIG. 8 is a diagram illustrating a problem when DL-SCFDMA is configured. As subframes #2 to #4, in the case where DL-SCFDMA SF is continued subsequent to DL-SCFDMA SF and in the case where DL SF is continued subsequent to DL-SCFDMA SF, it is not necessary to secure a guard period. On the other hand, as subframes #7 and #8, in the case where UL SF is continued subsequent to DL-SCFDMA SF, there is a possibility that an UL signal of the UL SF is transmitted in a prior subframe by TA. In this case, a collision of signals occurs in the DL-SCFDMA SF.

In this Embodiment, for example, by one of the following methods, it is reduced that reception of DL-SCFDMA and transmission of a UL signal concurrently occurs: (1) discard a UL SF continued from a DL-SCFDMA SF (the user terminal does not perform transmission in the UL SF); (2) discard a DL-SCFDMA SF immediately before a UL SF (the radio base station does not perform transmission in the DL-SCFDMA SF); and (3) apply a guard period to DL-SCFDMA SF (e.g. set a guard period using the existing special subframe configuration).

(Discontiguous band allocation of DL-SCFDMA)

In existing PUSCH allocation (UL grant), in consideration of the issue of Peak-to-Average Power Ratio (PAPR) in a transmission amplifier on the user terminal side, only contiguous band allocation is permitted. However, since DL-SCFDMA is transmitted from a radio base station, it is conceived that a requirement for the PAPR is low (loose). Accordingly, in scheduling of DL-SCFDMA in this Embodiment, a discontiguous band allocation is permitted. By this means, it is possible to improve the transmission quality of DL-SCFDMA, as compared with the case of using the existing UL resource allocation.

In addition, for example, the discontiguous band allocation may be notified by using a bitmap of the same size as the number of resource blocks (Direct bitmap), may be notified according to type 0/1 allocation used in DCI format 1/2, or may be notified according to another distributed resource block allocation (Distributed allocation) (e.g. using a virtual resource block or the like).

(Modification)

Each of the Embodiments as described above is described to apply to DL-SCFDMA SF, but the invention is not limited thereto. For example, it is possible to apply to MIMO, CSI feedback and scheduling in DSD SF.

Further, it may be configured that DL-SCFDMA SF and UL SF are used concurrently. For example, FDM is applied to DL-SCFDMA and UL-SCFDMA (e.g. DL-SCFDMA is allocated to a high frequency band, and UL-SCFDMA is allocated to a low frequency band), and by this means, flexible scheduling may be actualized. In this case, the user terminal and/or radio base station is required to be provided with an interference canceller.

Accordingly, it is preferable to indicate that DL-SCFDMA and UL-SCFDMA are concurrently available by capability signaling of the user terminal, UE (user terminal) category and the like. For example, the above-mentioned capability signaling and/or UE category may include the following information on DL-SCFDMA and/or UL-SCFDMA: (1) information on an available frequency band, bandwidth and the like; (2) information on the number of bits of simultaneous transmission/reception (information on maximum TBS (Transport Block Size)), soft buffer size, the number of MIMO layers and the like; and (3) Capability of CA. For example, the aforementioned (3) may be the number of CCs, and in the case where the number of CCs is a predetermined value or more, the user terminal may be allowed to simultaneously transmit DL-SCFDMA and UL-SCFDMA.

In addition, the capability/category as described above may be applied to multiplexing of another DL signal and UL signal, as well as DL-SCFDMA and UL-SCFDMA. For example, it is possible to use the capability/category indicating that simultaneous transmission of DL-OFDMA and UL-OFDMA is available.

(Configuration of a radio communication system)

A configuration of a radio communication system according to one Embodiment of the present invention will be described below. In the radio communication system, radio communication methods shown in the above-mentioned Embodiments 1 to 3 and Modification are applied alone or in combination thereof.

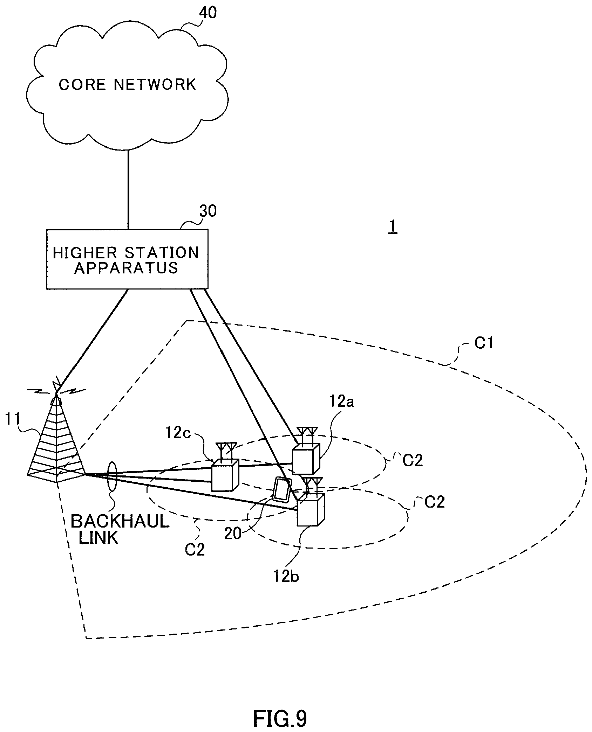

FIG. 9 is a schematic configuration diagram showing one example of the radio communication system according to one Embodiment of the present invention. For example, the radio communication system as shown in FIG. 9 is a system including an LTE system, SUPER 3G, LTE-A system and the like. In the radio communication system, it is possible to apply carrier aggregation (CA) to aggregate a plurality of base frequency blocks (component carriers) with a system bandwidth of the LTE system as one unit and/or dual connectivity (DC). In addition, the radio communication system may be called IMT-Advanced, or may be called 4G, 5G, FRA (Future Radio Access) and the like.

For example, the radio communication system 1 as shown in FIG. 9 is provided with a radio base station 11 for forming a macro cell C1 having relatively wide coverage, and radio base stations 12a to 12c disposed inside the macro cell C1 to form small cells C2 smaller than the macro cell C1. Further, a user terminal 20 is disposed in the macro cell C1 and each of the small cells C2. In addition, the numbers of the radio base stations 11 and 12 are not limited to the numbers shown in FIG. 9.

The user terminal 20 is capable of connecting to both of the radio base station 11 and the radio base station 12. The user terminal 20 may concurrently use the macro cell C1 and small cell C2 by CA or DC. In addition, the user terminal 20 may be configured to connect to one of the radio base stations 11 and 12.

The user terminal 20 and radio base station 11 are capable of communicating with each other using carriers (called the existing carrier, Legacy carrier and the like) with a narrow bandwidth in a relatively low frequency band (e.g. 2 GHz). On the other hand, the user terminal 20 and radio base station 12 may use carriers with a wide bandwidth in a relatively high frequency band (e.g. 3.5 GHz, 5GHz and the like), or may use the same carrier as in the radio base station 11. It is possible to configure that the radio base station 11 and radio base station 12 (or two radio base stations 12) undergo wired connection (optical fiber, X2 interface and the like), or wireless connection.

The radio base station 11 and each of the radio base stations 12 are relatively connected to a higher station apparatus 30, and are connected to a core network 40 via the higher station apparatus 30. In addition, for example, the higher station apparatus 30 includes an access gateway apparatus, Radio Network Controller (RNC), Mobility Management Entity (MME) and the like, but is not limited thereto. Further, each of the radio base stations 12 may be connected to the higher station apparatus 30 via the radio base station 11.

In addition, the radio base station 11 is a radio base station having relatively wide coverage, and may be called a macro base station, collection node, eNB (eNodeB), transmission point and the like. Further, the radio base station 12 is a radio base station having local coverage, and may be called a small base station, micro-base station, pico-base station, femto-base station, HeNB (Home eNodeB), RRH (Remote Radio Head), transmission point, and the like. Hereinafter, in the case of not distinguishing between the radio base stations 11 and 12, the stations are collectively called a radio base station 10. Each user terminal 20 is a terminal supporting various communication schemes such as LTE and LTE-A, and may include a fixed communication terminal, as well as the mobile communication terminal.

In the radio communication system 1, as radio access schemes, OFDMA (Orthogonal Frequency Division Multiple Access) is applied on downlink, and SC-FDMA (Single Carrier-Frequency Division Multiple Access) is applied on uplink. OFDMA is a multicarrier transmission scheme for dividing a frequency band into a plurality of narrow frequency bands (subcarriers), and mapping data to each subcarrier to perform communication. SC-FDMA is a single-carrier transmission scheme for dividing a system bandwidth into bands comprised of a single or contiguous resource blocks for each terminal so that a plurality of terminals uses mutually different bands, and thereby reducing interference among terminals. In addition, uplink and downlink radio access schemes are not limited to the combination of the schemes.

Further, in the radio communication system 1, the user terminal 20 is capable of receiving an OFDMA signal (DL-OFDMA) using a predetermined downlink (DL) resource (DL subframe and DL frequency band). Furthermore, the user terminal 20 is capable of transmitting and receiving SC-FDMA signals (UL-SCFDMA) using a predetermined UL resource (UL subframe and UL frequency band). Further, the radio base station 10 is capable of transmitting an SC-FDMA signal (DL-SCFDMA) to the user terminal 20 using a predetermined UL resource, and the user terminal 20 is capable of receiving the DL-SCFDMA. Moreover, using a predetermined UL resource, D2D communication (D2D discovery/communication) is performed between user terminals 20.

As downlink channels, in the radio communication system 1 are used a downlink shared channel (PDSCH: Physical Downlink Shared Channel) shared by user terminals 20, broadcast channel (PBCH: Physical Broadcast Channel), downlink L1/L2 control channels and the like. User data, higher layer control information and predetermined SIB (System Information Block) is transmitted on the PDSCH. Further, MIB (Master Information Block) is transmitted on the PBCH.

The downlink L1/L2 control channel includes the PDCCH (Physical Downlink Control Channel), EPDCCH (Enhanced Physical Downlink Control channel), PCFICH (Physical Control Format Indicator Channel), PHICH (Physical Hybrid-ARQ Indicator Channel) and the like. Downlink control information (DCI) including scheduling information of the PDSCH and PUSCH and the like is transmitted on the PDCCH. The number of OFDM symbols used in the PDCCH is transmitted on the PCFICH. A receipt confirmation signal (ACK/NACK) of HARQ for the PUSCH is transmitted on the PHICH. The EPDCCH may be frequency division multiplexed with the PDSCH (downlink shared data channel) to be used in transmitting the DCI and the like as the PDCCH.

As uplink channels, in the radio communication system 1 are used an uplink shared channel (PUSCH: Physical Uplink Shared Channel) shared by user terminals 20, uplink control channel (PUCCH: Physical Uplink Control Channel), random access channel (PRACH: Physical Random Access Channel) and the like. User data and higher layer control information is transmitted on the PUSCH. Further, radio quality information (CQI: Channel Quality Indicator) of downlink, receipt conformation signal and the like are transmitted on the PUCCH. A random access preamble (RA preamble) to establish connection with the cell is transmitted on the PRACH. Further, as an uplink reference signal, transmitted are a reference signal for channel quality measurement (SRS: Sounding Reference Signal), and a reference signal for demodulation (DM-RS: Demodulation Reference Signal) to demodulate the PUCCH and PUSCH.

Further, in the radio communication system 1, DL transmission (DL-SCFDMA transmission/reception) is performed using SC-FDMA (e.g. PUSCH) set on a predetermined UL resource (UL subframe and UL frequency). A receipt confirmation signal for DL PUSCH may be transmitted using the PUCCH.

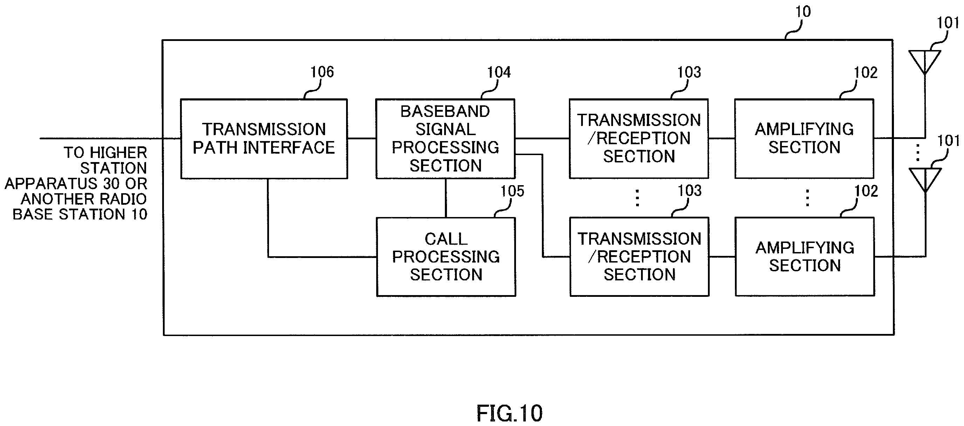

FIG. 10 is an entire configuration diagram of the radio base station 10 according to this Embodiment. The radio base station 10 (including the radio base stations 11 and 12) is provided with a plurality of transmission/reception antennas 101 for MIMO transmission, amplifying sections 102, transmission/reception sections 103, baseband signal processing section 104, call processing section 105, and transmission path interface 106. In addition, the transmission/reception section 103 is comprised of a transmission section and a reception section.

User data to transmit to the user terminal 20 from the radio base station 10 on downlink is input to the baseband signal processing section 104 from the higher station apparatus 30 via the transmission path interface 106.

The baseband signal processing section 104 performs, on the user data, transmission processing such as processing of PDCP (Packet Data Convergence Protocol) layer, segmentation and concatenation of the user data, transmission processing of RLC (Radio Link Control) layer such as RLC retransmission control, MAC (Medium Access Control) retransmission control (e.g. transmission processing of HARQ (Hybrid Automatic Repeat reQuest)), scheduling, transmission format selection, channel coding, Inverse Fast Fourier Transform (IFFT) processing, and precoding processing to transfer to each of the transmission/reception sections 103. Further, also concerning a downlink control signal, the section 104 performs transmission processing such as channel coding and Inverse Fast Fourier Transform on the signal to transfer to each of the transmission/reception sections 103.

Each of the transmission/reception sections 103 converts the baseband signal, which is subjected to precoding for each antenna and is output from the baseband signal processing 104, into a signal with a radio frequency band to transmit. The radio-frequency signal subjected to frequency conversion in the transmission/reception section 103 is amplified in the amplifying section 102, and is transmitted from the transmission/reception antenna 101. The transmission/reception section 103 is capable of being a transmitter/receiver, transmission/reception circuit or transmission/reception apparatus explained based on common recognition in the technical field according to the present invention.

The transmission/reception section 103 (transmission section) is capable of transmitting information (enable/disable) to configure reception of the downlink signal (DL-SCFDMA) using uplink resources to the user terminal, by higher layer signaling (RRC, broadcast signal, etc.) Further, the transmission/reception section 103 is capable of notifying the user terminal of information on a subframe to perform transmission/reception of DL-SCFDMA.

On the other hand, for uplink signals, a radio-frequency signal received in each of the transmission/reception antennas 101 is amplified in respective one of the amplifying sections 102. Each of the transmission/reception sections 103 receives the uplink signal amplified in the amplifying section 102. Each of the transmission/reception sections 103 performs frequency conversion on the received signal into a baseband signal to output to the baseband signal processing section 104.

For user data included in the input uplink signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer to transfer to the higher station apparatus 30 via the transmission path interface 106. The call processing section 105 performs call processing such as setting and release of a communication channel, state management of the radio base station 10, and management of radio resources.

The transmission path interface 106 transmits and receives signals to/from the higher station apparatus 30 via a predetermined interface. Further, the transmission path interface 106 may transmit and receive signals (backhaul signaling) to/from an adjacent radio base station 10 via an inter-base station interface (e.g. optical fiber, X2 interface). For example, the transmission path interface 106 may transmit and receive information to configure reception of DL-SCFDMA for a predetermined user terminal to/from the adjacent radio base station 10.

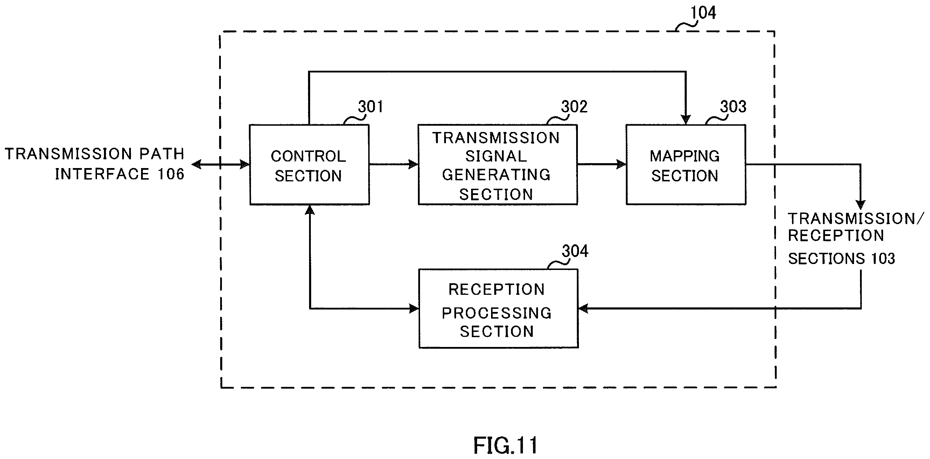

FIG. 11 is a diagram showing one example of a function configuration of the radio base station according to this Embodiment. In addition, FIG. 11 mainly shows function blocks of a characteristic portion in this Embodiment, and the radio base station 10 is assumed to have other function blocks required for radio communication.

As shown in FIG. 11, the baseband signal processing section 104 of the radio base station 10 includes at least a control section (scheduler) 301, transmission signal generating section 302, mapping section 303, and reception processing section 304 to be comprised thereof.

The control section (scheduler) 301 controls scheduling (e.g. resource allocation) of a downlink data signal transmitted on the PDSCH and downlink control signal transmitted on the PDCCH and/or Enhanced PDCCH (EPDCCH). Further, the control section 301 also controls scheduling of the downlink signal (DL-SCFDMA) transmitted in SC-FDMA.

Further, the control section 301 also controls scheduling of the system information, synchronization signal, downlink reference signals such as a CRS (Cell-specific Reference Signal) and CSI-RS (Channel State Information Reference Signal) and the like. Furthermore, the control section controls scheduling of an uplink reference signal, uplink data signal transmitted on the PUSCH, uplink control signal transmitted on the PUCCH and/or the PUSCH, RA preamble transmitted on the PRACH and the like. The control section 301 is capable of being a controller, control circuit or control apparatus explained based on the common recognition in the technical field according to the present invention.

Moreover, the control section 301 is capable of instructing the user terminal to receive DL-SCFDMA (e.g. DL PUSCH), using the downlink control channel (PDCCH and/or EPDCCH). For example, the control section 301 controls to transmit a reception instruction (DL-SCFDMA grant) of DL-SCFDMA so that the user terminal receives DL-SCFDMA in a subframe in which an instruction for transmission of uplink data by the UL grant is not performed. Further, the control section 301 controls to transmit DL-SCFDMA in the same subframe as a subframe for transmitting a reception instruction signal (DL-SCFDMA grant) of DL-SCFDMA or in a subframe after a lapse of a predetermined period.

Further, the control section 301 may configure the grant (e.g. UL grant of the existing system) for instructing the user terminal to transmit uplink data using the PUSCH or the grant (e.g. DL grant of the existing system) for instructing the user terminal to receive downlink data using the PDSCH, and the DL-SCFDMA grant in common as a single grant to use. In this case, based on another information (information on the subframe to transmit DL-SCFDMA and the like), the user terminal 20 is capable of judging the description of the grant.

The control section 301 selects a transmission mode (TM) to apply to DL-SCFDMA from among a plurality of UL TMs or a plurality of DL TMs, and controls to use in transmission processing of DL-SCFDMA (Embodiment 1).

The control section 301 transmits a signal used in CSI measurement of DL-SCFDMA in the user terminal 20 in a DL-SCFDMA subframe (Embodiment 2). For example, the control section 301 controls to transmit the DL SRS and Non-precoded DM-RS in a predetermined DL-SCFDMA SF.

Based on instructions from the control section 301, the transmission signal generating section 302 generates DL signals (downlink control signal, downlink data, downlink reference signal and the like) to output to the mapping section 303. For example, based on instructions from the control section 301, the transmission signal generating section 302 generates the DL grant (DL assignment) for notifying of downlink signal assignment information and the UL grant for notifying of uplink signal assignment information. Further, the downlink data is subjected to coding processing and modulation processing according to a coding rate, modulation scheme and the like determined based on the CSI from each user terminal 20 and the like. The transmission signal generating section 302 is capable of being a signal generator or signal generating circuit explained based on the common recognition in the technical field according to the present invention.

Further, in a predetermined UL subframe, the transmission signal generating section 302 generates a downlink signal (DL-SCFDMA) with the same signal configuration (e.g. the same radio access scheme, the same radio resource allocation, the same subframe or the like) as that of the uplink signal (e.g. D2D signal). In addition, the DL-SCFDMA does not need to have the completely same signal configuration as that of the uplink signal. For example, the DL-SCFDMA may include the channel measurement signal (DL SRS, Non-precoded DM-RS and the like) with a different signal configuration from that of the channel measurement signal (UL SRS) in the uplink signal.

Based on instructions from the control section 301, the mapping section 303 maps the downlink signal generated in the transmission signal generating section 302 to radio resources to output to the transmission/reception section 103. Based on instructions from the control section 301, for example, the mapping section 303 maps downlink data to the PDSCH or PUSCH (DL-PUSCH). Further, based on instructions from the control section 301, the mapping section 303 maps another DL-SCFDMA signal to UL resources. In addition, the mapping section 303 is capable of being comprised of a mapping circuit or mapper used in the technical field according to the present invention.

The reception processing section 304 performs reception processing (e.g. demapping, demodulation, decoding and the like) on the UL signal (uplink control signal, uplink data, uplink reference signal and the like) transmitted from the user terminal 20. Further, the reception processing section 304 may measure received power (RSRP: Reference Signal Received Power) and channel state using the received signal (e.g. SRS). In addition, the processing result and measurement result may be output to the control section 301. The reception processing section 304 is capable of being comprised of a signal processing device/measurement device, signal processing circuit/measurement circuit or signal processing apparatus/measurement apparatus used in the technical field according to the present invention.

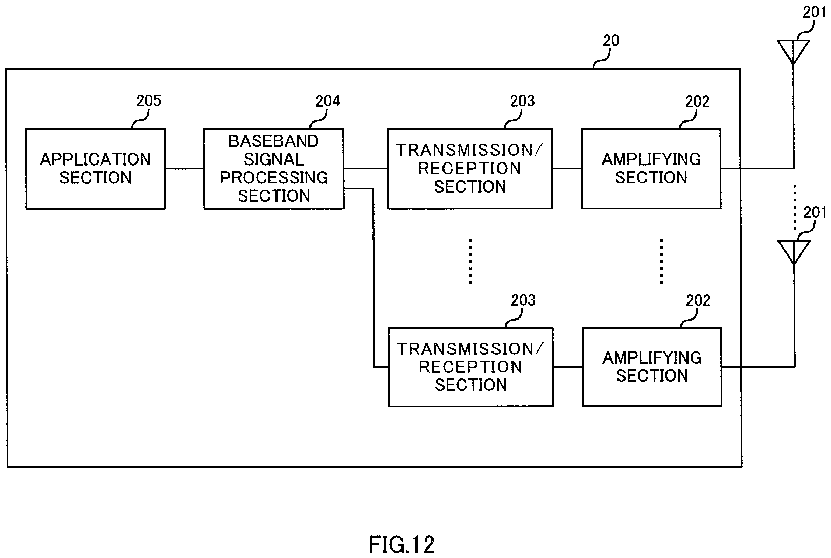

FIG. 12 is an entire configuration diagram of the user terminal 20 according to this Embodiment. As shown in FIG. 12, the user terminal 20 is provided with a plurality of transmission/reception antennas 201 for MIMO transmission, amplifying sections 202, transmission/reception sections 203, baseband signal processing section 204, and application section 205. In addition, the transmission/reception section 203 may be comprised of a transmission section and a reception section.

Radio-frequency signals received in a plurality of transmission/reception antennas 201 are respectively amplified in the amplifying sections 202. Each of the transmission/reception sections 203 receives the downlink signal amplified in the amplifying section 202. The transmission/reception section 203 performs frequency conversion on the received signal into a baseband signal to output to the baseband signal 204.

Based on information to configure (enable/disable) DL-SCFDMA reception, the transmission/reception section 203 (reception section) receives DL-SCFDMA. Specifically, the transmission/reception section 203 receives the DL-SCFDMA grant, and at predetermined timing subsequent thereto, receives DL-SCFDMA (e.g. DL-PUSCH). In addition, the transmission/reception section 203 is capable of being comprised of a transmitter/receiver, transmission/reception circuit or transmission/reception apparatus used in the technical field according to the present invention.

Further, the transmission/reception section 203 (reception section) may receive information on a transmission mode (TM) to apply to DL-SCFDMA, information (e.g. TPMI) on precoding to apply to DL-SCFDMA and the like, for example, by higher layer signaling (e.g. RRC signaling), MAC CE, physical control information (DCI).

The baseband signal processing section 204 performs FFT processing, error correcting decoding, reception processing of retransmission control and the like on the input baseband signal. User data on downlink is transferred to the application section 205. The application section 205 performs processing concerning layers higher than physical layer and MAC layer, and the like. Further, among the downlink data, broadcast information is also transferred to the application section 205.

On the other hand, for user data on uplink, the data is input to the baseband signal processing section 204 from the application section 205. The baseband signal processing section 204 performs transmission processing of retransmission control (e.g. transmission processing of HARQ), channel coding, precoding, Discrete Fourier Transform (DFT) processing, IFFT processing and the like to transfer to each of the transmission/reception sections 203. Each of the transmission/reception sections 203 converts the baseband signal output from the baseband signal processing section 204 into a signal with a radio frequency band. The radio-frequency signals subjected to frequency conversion in the transmission/reception sections 203 are amplified in the amplification sections 202, and transmitted from the transmission/reception antennas 201, respectively.

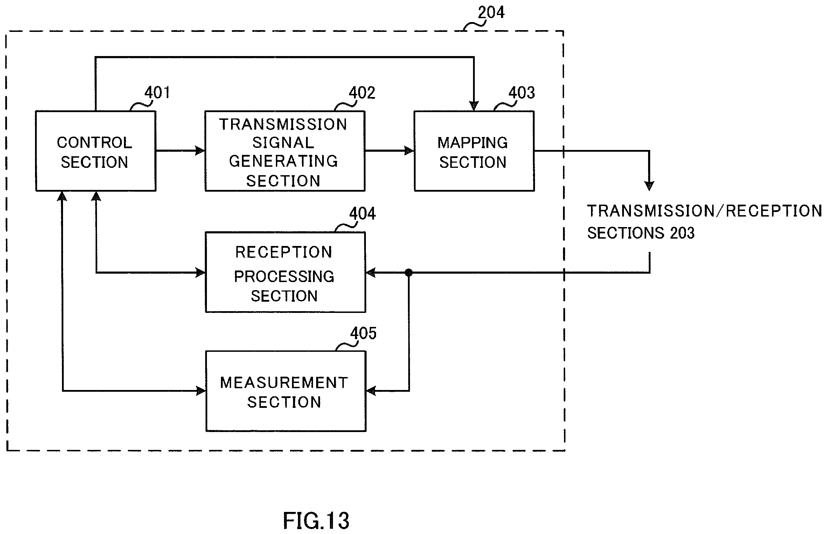

FIG. 13 is a diagram showing one example of a function configuration of the user terminal according to one Embodiment of the present invention. In addition, FIG. 13 mainly illustrates function blocks of a characteristic portion in this Embodiment, and the user terminal 20 is assumed to have other function blocks required for radio communication.

As shown in FIG. 13, the baseband signal processing section 204 of the user terminal 20 includes at least a control section 401, transmission signal generating section 402, mapping section 403, reception processing section 404, and measurement section 405 to be comprised thereof.

The reception processing section 404 performs reception processing (e.g. demapping, demodulation, decoding and the like) on the DL signal transmitted from the radio base station 10. Further, based on instructions from the control section 401, the reception processing section 404 is capable of performing reception processing of DL-SCFDMA. In addition, the reception processing section 404 is capable of being comprised of a signal processing device, signal processing circuit or signal processing apparatus used in the technical field according to the present invention.

For example, the reception processing section 404 decodes a control signal transmitted on the downlink control channel (PDCCH/EPDCCH, DL-PUCCH), and outputs scheduling information to the control section 401. Further, the reception processing section 404 decodes downlink data transmitted on the downlink shared channel (PDSCH) and data transmitted on the uplink shared channel (DL-PUSCH) to output to the application section 205.

Based on instructions from the control section 401, the measurement section 405 may measure received power (RSRP) and channel state (CSI), using the received signal received in a predetermined radio resource. For example, the control section 405 measures a channel state (state of the channel on which DL-SCFDMA propagates) of DL-SCFDMA using a predetermined radio resource (Embodiment 2). In addition, the processing result and measurement result are output to the control section 401. In addition, the measurement section 405 is capable of being comprised of a measurement device, measurement circuit or measurement apparatus used in the technical field according to the present invention.

Based on the downlink control signal transmitted from the radio base station 10, and a retransmission control judgement result for the PDSCH and/or DL PUSCH, the control section 401 controls generation/transmission of the UL signal such as the uplink control signal (feedback signal) and uplink data. Specifically, the control section 401 controls the transmission signal generating section 402 and mapping section 403. In addition, the downlink control signal is output from the reception processing section 404, and the measurement result of the channel state is output from the measurement section 405. The control section 401 is capable of being comprised of a controller, control circuit or control apparatus used in the technical field according to the present invention.

The control section 401 selects a transmission mode (TM) applied to DL-SCFDMA transmitted from the radio base station 10 from among a plurality of UL TMs or a plurality of DL TMs, and controls so that the reception processing section 405 uses the selected TM in reception processing of DL-SCFDMA (Embodiment 1). For example, the control section 401 may determine the TM of DL-SCFDMA SF based on the TM used in another subframe or based on information included in notification from the radio base station 10.

The control section 401 controls so that the measurement section 405 measures the CSI using a predetermined radio resource in a DL-SCFDMA subframe (Embodiment 2). For example, based on information on the DL SRS and information on the Non-precoded DM-RS notified from the radio base station 10, the control section 401 controls the measurement section 405 so as to measure a signal transmitted in a predetermined frequency region at predetermined measurement timing.

Further, the control section 401 controls (adjusts) scheduling of DL-SCFDMA SF (Embodiment 3). For example, in a subframe set for both of reception of DL-SCFDMA and transmission of a predetermined uplink signal (e.g. SRS (Sounding Reference Signal) specific to the cell), the control section 401 controls reception of DL-SCFDMA and/or transmission of the predetermined uplink signal.

For example, when the control section 401 determines that another user terminal transmits a cell-specific SRS in a DL-SCFDMA SF, the control section 401 applies the shortened format to the DL-SCFDMA SF. Further, when UL SRS transmission is instructed in DL-SCFDMA, for example, the DL-SCFDMA SF is received in a part of symbols, and the UL SRS is transmitted in the other symbol.

Further, in the case of subframes where DL-SCFDMA SF and UL SF are continued, in order that a collision of signals do not occur in the DL-SCFDMA SF, the control section 401 controls reception of DL-SCFDMA and/or transmission of the UL signal. For example, the control section 401 is capable of controlling so as to provide a guard period in the DL-SCFDMA SF.

Furthermore, based on the CSI measurement result, the control section 401 controls the transmission signal generating section 402 and mapping section 403 so as to generate CSI feedback information to transmit to the radio base station 10. For example, the control section 401 may control the transmission signal generating section 402 so as to determine the PMI included in CSI feedback using a codebook for UL or a codebook for DL.

Based on instructions from the control section 401, the transmission signal generating section 402 generates an uplink signal to output to the mapping section 403. For example, based on instructions from the control section 401, the transmission signal generating section 402 generates an uplink control signal such as a receipt conformation signal (HARQ-ACK) and channel state information (CSI).

Further, based on instructions from the control section 401, the transmission signal generating section 402 generates uplink data. For example, when the UL grant is included in the downlink control signal notified from the radio base station 10, the control section 401 instructs the transmission signal generating section 402 to generate uplink data. In addition, the transmission signal generating section 402 is capable of being comprised of a signal generator or signal generating circuit used in the technical field according to the present invention.

Based on instructions from the control section 401, the mapping section 403 maps the uplink signal generated in the transmission signal generating section 402 to radio resources (e.g. PUCCH and PUSCH) to output to the transmission/reception section 203. For example, the mapping section 403 maps a receipt confirmation signal for DL PUSCH to predetermined PUCCH resources. In addition, the mapping section 403 is capable of being comprised of a mapping circuit or mapper used in the technical field according to the present invention.

As described above, the block diagram used in explanation of each apparatus configuration shows blocks on a function-by-function basis. These function blocks (configuration section) are actualized by any combination of hardware and software. Further, the means for actualizing each function block is not limited particularly. In other words, each function block may be actualized by a single physically combined apparatus, or two or more physically separated apparatuses are connected by cable or radio, and each function block may be actualized by a plurality of these apparatuses.

For example, a part or the whole of each of functions of the radio base station 10 and user terminal 20 may be actualized using hardware such as ASIC (Application Specific Integrated Circuit), PLD (Programmable Logic Device), and FPGA (Field Programmable Gate Array). Further, each of the radio base station 10 and user terminal 20 may be actualized by a computer apparatus including a processor (CPU), communication interface for network connection, memory, and computer-readable storage medium holding programs.

Herein, the processor, memory and the like are connected on the bus to communicate information. Further, for example, the computer-readable storage medium is a storage medium such as a flexible disk, magneto-optical disk, ROM, EPROM, CD-ROM, RAM and hard disk. Furthermore, the program may be transmitted from a network via an electrical communication line. Still furthermore, each of the radio base station 10 and user terminal 20 may include an input apparatus such as input keys and output apparatus such as a display.

The function configurations of the radio base station 10 and user terminal 20 may be actualized by the above-mentioned hardware, may be actualized by software modules executed by the processor, or may be actualized in combination of the hardware and software modules. The processor operates an operating system to control the entire user terminal. Further, the processor reads the program, software module and data from the storage medium onto the memory, and according thereto, executes various kinds of processing. Herein, it is essential only that the program is a program for causing the computer to execute each operation described in each of the above-mentioned Embodiments. For example, the control section 401 of the user terminal 20 may be actualized by a control program stored in the memory to operate by the processor, and the other function blocks may be actualized similarly.

As described above, the present invention is specifically described, but it is obvious to a person skilled in the art that the invention is not limited to the Embodiments described in the present Description. For example, each of the above-mentioned Embodiments may be used alone or in combination. The invention is capable of being carried into practice as modified and changed aspects without departing from the subject matter and scope of the invention defined by the descriptions of the scope of the claims. Accordingly, the descriptions of the present Description are intended for illustrative explanation, and do not have any restrictive meaning to the invention.

The present application is based on Japanese Patent Application No. 2014-176203 filed on August 29, 2014, entire content of which is expressly incorporated by reference herein.

## Claims

1. A user terminal that communicates with a radio base station using a downlink subframe for enabling a first downlink signal to be received, and an uplink subframe for enabling an uplink signal to be transmitted, comprising:

   a transmission section that transmits an uplink signal using a predetermined radio access scheme in an uplink subframe;
   a reception section that receives a second downlink signal transmitted using the predetermined radio access scheme in an uplink subframe; and
   a control section that selects a transmission mode applied to the second downlink signal from a transmission mode applicable to the first downlink signal and a transmission mode applicable to the uplink signal to control reception processing.

2. The user terminal according to claim 1, wherein the control section selects the transmission mode applied to the second downlink signal in association with the transmission mode applied to the first downlink signal or the transmission mode applied to the uplink signal.

3. The user terminal according to claim 1, wherein the control section selects the transmission mode applied to the second downlink signal from a transmission mode in which closed-loop type control is not performed.

4. The user terminal according to claim 1, wherein the reception section receives information on the transmission mode applied to the second downlink signal by RRC signaling.

5. The user terminal according to claim 4, wherein the reception section receives the second downlink signal based on a reception instruction signal for instructing to receive the second downlink signal, and for a predetermined period prior and/or subsequent to reception of the RRC signaling, receives the reception instruction signal including a downlink control signal common to a plurality of transmission modes.

6. A user terminal that communicates with a radio base station using a downlink subframe for enabling a first downlink signal to be received, and an uplink subframe for enabling an uplink signal to be transmitted, comprising:

   a transmission section that transmits an uplink signal using a predetermined radio access scheme in an uplink subframe;
   a reception section that receives a second downlink signal transmitted using the predetermined radio access scheme in an uplink subframe; and
a measurement section that measures a channel state of the second downlink signal, using a channel measurement signal for the second downlink signal.

7. The user terminal according to claim 6, wherein the measurement section measures the channel state of the second downlink signal, using a signal multiplexed into a part of a last symbol of a subframe as the channel measurement signal for the second downlink signal.

8. The user terminal according to claim 6, wherein the measurement section measures the channel state of the second downlink signal without precoding being applied, using a signal without precoding being applied as the channel measurement signal for the second downlink signal, and
the reception section receives the second downlink signal based on a reception instruction signal for instructing to receive the second downlink signal, and receives the reception instruction signal including information on precoding to apply to the second downlink signal.

9. A radio base station that communicates with a user terminal using a downlink subframe for enabling a first downlink signal to be transmitted, and an uplink subframe for enabling an uplink signal to be received, comprising:

a reception section that receives an uplink signal using a predetermined radio access scheme in an uplink subframe;
a transmission section that transmits a second downlink signal using the predetermined radio access scheme in an uplink subframe; and
a control section that selects a transmission mode to apply to the second downlink signal from a transmission mode applicable to the first downlink signal and a transmission mode applicable to the uplink signal.

10. A radio communication method in which a radio base station and a user terminal communicate with each other using a downlink subframe for enabling a first downlink signal to be received, and an uplink subframe for enabling an uplink signal to be transmitted, including:

in the user terminal,
transmitting an uplink signal using a predetermined radio access scheme in an uplink subframe;
receiving a second downlink signal transmitted using the predetermined radio access scheme in an uplink subframe; and
selecting a transmission mode applied to the second downlink signal from a transmission mode applicable to the first downlink signal and a transmission mode applicable to the uplink signal to control reception processing.

FIG.1A

FREQUENCY

| //D// | //D// | //D// | //D// | //D// | //D// | //D// | //D// | //D// | //D// |

| U | U | U | U | U | U | U | U | U | U |

TIME

FDD

FIG.1B

FREQUENCY

| //D// | |S| | U | U | //D// | //D// | |S| | U | U | //D// |

TIME

TDD

EP 3 188 537 A1

| UL/DL CONFIGURATION | SUBFRAME n | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

D : DL SUBFRAME

U : UL SUBFRAME

S : SPECIAL SUBFRAME

FIG.2

FIG.3A

FIG.3B

FIG.4A

DL TM (e.g., 4-Tx TM9)

eNB

UE

DL SF

FIG.4B

UL TM (e.g., 2-Tx TM2)

eNB

UE

UL SF

FIG.4C

DL TM or UL TM

eNB

UE

DL-SCFDMA SF

FIG.5

SUBFRAME

0 1 2 3 4 5 6 7 8 9 10 11 12 13

1 RB

FREQUENCY

TIME

PUCCH

PUSCH

SRS (Tx-1)

SRS (Tx-2)

PRECODED DMRS

EP 3 188 537 A1

EP 3 188 537 A1

SUBFRAME

0 1 2 3 4 5 6 7 8 9 10 11 12 13

1 RB

FREQUENCY

TIME

▦ PUCCH

☐ PUSCH

⊞ SRS, PUSCH, ETC.

▨ PRECODED DMRS

⊠ NON-PRECODED DMRS (Tx-1)

⊡ NON-PRECODED DMRS (Tx-2)

FIG.6

FIG.7

FIG.8

FIG.9

FIG.10

FIG.11

FIG.12

FIG.13

**EP 3 188 537 A1**

## INTERNATIONAL SEARCH REPORT

International application No.

PCT/JP2015/073435

A. CLASSIFICATION OF SUBJECT MATTER
*H04W28/06*(2009.01)i, *H04B7/04*(2006.01)i, *H04J1/00*(2006.01)i, *H04J11/00*(2006.01)i, *H04J99/00*(2009.01)i, *H04W72/04*(2009.01)i

According to International Patent Classification (IPC) or to both national classification and IPC

B. FIELDS SEARCHED

Minimum documentation searched (classification system followed by classification symbols)
H04W4/00-99/00, H04B7/04, H04J1/00, H04J11/00, H04J99/00

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Huawei, HiSilicon, "BS Demodulation performance requirements for eIMTA", 3GPP TSG-RAN WG4 Meeting #70bis R4-141691, 2014.04.09, pp.1-6 | 1-10 |
| A | JP 2014-33326 A (Sharp Corp.), 20 February 2014 (20.02.2014), paragraphs [0122] to [0173] & EP 2882223 A1 paragraphs [0096] to [0146] & WO 2014/021294 A1   & CN 104541544 A | 1-10 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 October 2015 (30.10.15) | 10 November 2015 (10.11.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014176203 A